# EUROPEAN PATENT SPECIFICATION

(11) **EP 0 435 511 B1**
(45) Date of publication and mention of the grant of the patent: **10.04.1996**
(21) Application number: 90313558.0
(22) Date of filing: 13.12.1990
(51) Int. Cl.: G06K 11/06, G06F 1/16

(54) **Electronic tablets**
Elektronisches Tablett
Tablette électronique

(30) Priority: 27.12.1989 JP 344626/89
(43) Date of publication of application: 03.07.1991
(73) Proprietor: SONY CORPORATION, Tokyo 141 (JP)
(72) Inventor: Uchida, Hiroshi, c/o Patents Div., Sony Corp., Tokyo 141 (JP)
(74) Representative: Cotter, Ivan John

(56) References cited:
- EP-A- 0 211 727
- US-A- 4 075 702
- US-A- 4 927 986

## Description

This invention relates to electronic tablets which may, for example, be used for processing hand writing inputs.

Hand writing input processors are of known various types such as electronic notebooks, keyboard-less computers, drawing terminals, digitizing tablets, etc. Generally, a planar input surface is provided (referred to herein as a 'tablet'). The tablet includes some sort of matrix of electrode lines so that contacting a pen tip with the surface of the tablet can be tracked by association with coordinates relating to every point of contact. By analyzing the coordinates associated with one or more points of contact, a hand written input can be processed.

Heretofore, the point of contact between the pen tip and the tablet has been recognized by methods such as electromagnetic coupling or resistance change detection. With methods such as these, there is no need additionally to connect the input pen to a signal processing circuit and thus, the pen is not tethered. As a result, the user is free to pick up a pen and use it with high efficiency.

However, because the pen is not tethered, it can become lost. While in some cases alternative pens can be used, generally specially designed pens must be used. Thus, the loss of the pen can render the tablet useless unless another pen is obtained. Moreover, even if an alternative pen can be used, the difference in pen tips might be detrimental to the tablet surface thereby damaging the tablet.

Of course, to prevent loss of a pen it could be tethered to the tablet. However, tethering the pen limits its freedom and can lessen the efficiency of its use.

Patent Specification US-A-4 075 702 discloses an electronic calculator and wallet for cheques and the like, the wallet including a receptacle for a pen.

Patent Specification EP-A-0 211 727 discloses a device for digitalizing graphical data including a drawing table on which write or erase means in the form of pens can be used for performing visible plottings or erasings, a drawer being provided in the device for storing the pens.

According to the present invention there is provided an electronic tablet which can receive hand written information via an input pen, including a receptacle for the pen,
characterised by a detector operative to detect the presence of the pen in the receptacle.

Preferably the tablet includes a combination display and input surface on which the untethered pen can input hand written information; a power detector operative to detect non-provision of operational power to the tablet; and a warning signal generator operatively coupled to the power detector and pen detector that generates a warning signal when non-provision of operating power to the tablet and absence of the pen from the receptacle are concurrently detected.

The electronic tablet may include a substantially rectangular housing with a top face; an input/display surface disposed at said top face; and a cover attached to said housing and operative to move between open and closed positions, said cover overlying said input/display surface in its closed position; wherein the pen is an untethered pen and is used to input hand written information via said input/display surface.

Embodiments of the present invention can thus provide a hand writing input apparatus with an untethered pen whose loss is prevented or discouraged.

The invention will now be described by way of example with reference to the accompanying drawings, throughout which like parts are referred to by like references, and in which:
Figure 1 is a perspective view of a tablet, which forms a hand writing input apparatus, with an input surface covered by a cover member and an input pen removed from a receptacle;
Figure 2 is a perspective view of the tablet of Figure 1 with its input surface exposed and the input pen received within the receptacle;
Figure 3 is an enlarged cross-sectional view on the line III-III in Figure 2;
Figure 4 is a cross-sectional view on the line IV-IV in Figure 3;
Figure 5 is a cross-sectional view on the line V-V in Figure 3;
Figure 6 is a block diagram of a warning circuit;
Figure 7A is an enlarged cross-sectional view on the line VII-VII in Figure 3 illustrating a pen locking mechanism in a locked state;
Figure 7B is an enlarged cross-sectional view on the line VII-VII in Figure 3 illustrating the locking mechanism of Figure 7A in an unlocked state;
Figures 8A and 8B illustrate another hand writing input apparatus in accordance with the invention; Figure 8A being a partly broken away front view to illustrate a state in which an input pen is not received in a pen receptacle; and Figure 8B being a partly broken away front view illustrating a state in which the input pen is received in the pen receptacle; and
Figures 9A and 9B illustrate a third hand writing input apparatus in accordance with the invention; Figure 9A being a partly broken away front view illustrating a state in which an input pen is not received in a pen receptacle; and Figure 9B being a partly broken away front view illustrating a state in which the input pen is received in the pen receptacle.

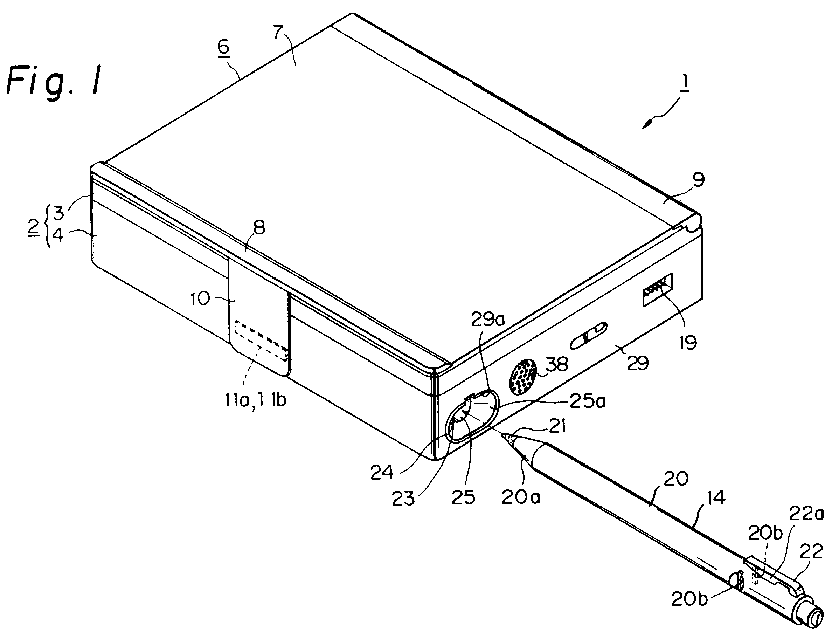

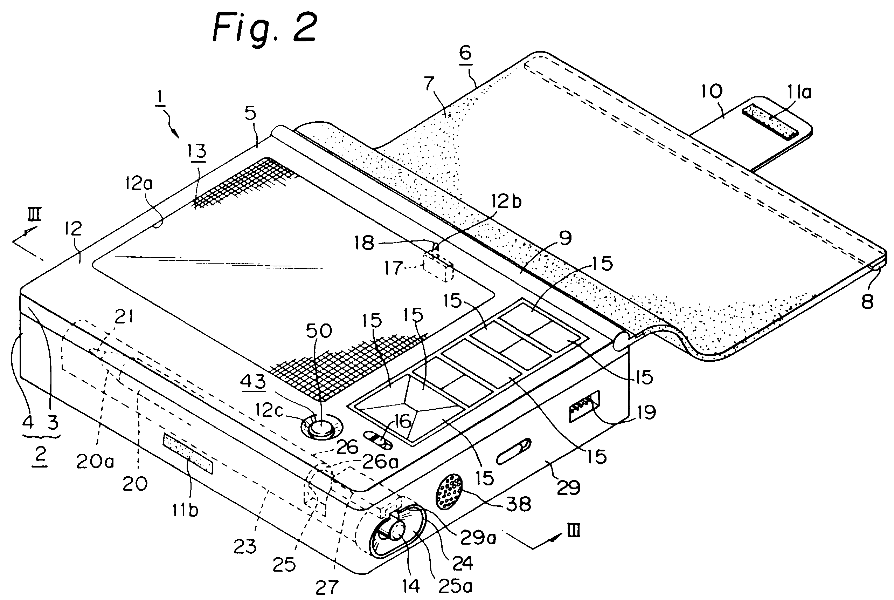

In Figures 1 and 2 there is illustrated a hand writing input apparatus 1 that can be referred to as an electronic tablet, notebook or slate. The electronic tablet 1 comprises a housing or case 2 having substantially a rectangular box-shape. The case 2 is formed by suitably joining together upper and lower halves 3 and 4.

An upper surface of the tablet 1 is the operating surface 5 through which hand written information is input into the tablet 1. The input surface 5 can be covered by a removable cover 6 that is freely opened or closed. The cover 6 comprises a main portion 7 preferably made of rubber and a reinforcing plate 8 fixed to a front edge of the main portion 7.

A hinge member 9 serves hingedly to secure the cover 6 to a top edge of the case 2. Thus, the main portion 7 is movable between an open position wherein the operating surface 5 is exposed, as illustrated in Figure 2, and a closed position wherein the main portion 7 overlays and covers the operating surface 5, as illustrated in Figure 1.

Provided along a front edge portion of the cover 6 is a flap 10. One end of the flap 10 is secured to the reinforcing plate 8. Another free end is provided with one member 11a of a face fastener. A cooperating face fastener member 11b is secured to the case 2 so that the cover 6 can be secured in its closed position by appropriate overlaying of the fastener members 11a and 11b. The fastener members 11a and 11b can comprise the cooperating members of suitable hook and loop fasteners, commonly sold under the trademark VELCRO.

An upper surface wall 12 of the upper half 3 has an opening 12a which occupies most of the area of the wall 12. A liquid crystal tablet panel 13 is fitted into the opening 12a. The panel 13 is formed by, for example, overlaying a transparent tablet onto a liquid crystal display panel. The panel 13 is operative to receive hand written information input by use of an appropriate input pen 14. The panel 13 also displays information as needed.

Operating buttons 15 are arranged on the operating surface 5 along the right-hand side of the panel 13.

A power button 16 for operating a power switch (not illustrated) is disposed on the operating surface 5 and is movable between a position to turn on a power source and a position to turn off the power source.

A separate shut-off switch 17 is disposed on a rear edge portion of the case 2. The switch 17 is provided with a pin-shaped element 18 which extends through a hole 12b formed in the wall 12 so as to protrude therefrom. The pin-shaped element 18 is located so as to be depressed by the cover 6 when the cover 6 is placed in its closed position, so that the shut-off switch 17 shuts off the power source regardless of the position of the power button 16.

An input/output connector 19 is provided for connection of the tablet 1 to an external apparatus, and preferably comprises a pin connector.

The tablet 1 includes a suitable display circuit and a suitable input circuit for operation of the panel 13. Similarly, within the case 2, there are provided a calculation control section, a memory section, and various interfaces and the like, as needed.

The pen 14 has a length which is slightly shorter than the length in the lateral direction of the case 2. Accordingly, the length of the pen 14 is shorter than the length along the front edge of the case 2.

A main portion 20 of the pen 14 has a cylindrical shape. An end portion 20a is conically shaped and is secured to one axial end of the main portion 20. A pen tip 21 is appropriately attached so as to project from the tip of the end portion 20a (hereinafter referred to as the conical portion). On the other axial end of the main portion 20, a clip 22 is attached thereto. The clip 22 has parallel side walls 22a.

The main cylindrical portion 20 is also provided with engaging grooves 20b which extend in a direction perpendicular to the axial direction of the main portion 20. The engaging grooves 20b are formed at two positions on opposite sides of the main portion 20 close to the clip 22. The engaging grooves 20b are provided to prevent release of the pen 14 from the case 2 in a manner which will be described below.

As illustrated, the case 2 is provided with a pen receptacle 23 within which is accommodated the pen 14. The receptacle 23 is disposed near a front edge portion of the case 2 and extends between two lateral faces of the case 2.

The receptacle 23 preferably comprises a unitary member formed of a synthetic resin, and is formed to have a length substantially the same as that of the pen 14.

As illustrated, the receptacle 23 is a substantially cylindrical member having a substantially cylindrical bore 25 extending therethrough. One edge 24 of the receptacle 23 is secured to one lateral face of the case 2. The edge 24 is shaped to be substantially elliptical for reasons that will become clearer below. As illustrated, a wall 25a extending from the edge 24 to the bore 25 is curved so as to taper from the edge 24 to an edge of the bore 25.

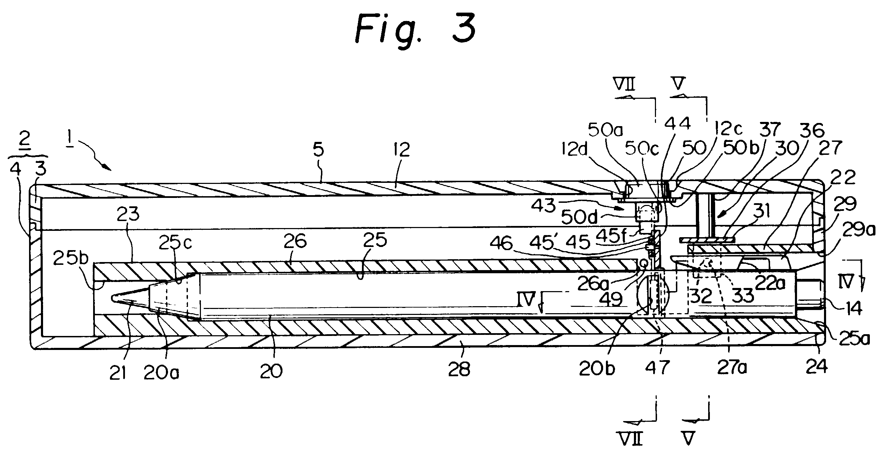

As illustrated best in Figure 3, the bore 25 preferably is shaped to have an end portion 25b, within which is accommodated the pen tip 21, which has a diameter smaller than that portion of the bore 25, within which is accommodated the main cylindrical portion 20 of the pen 14. A tapering bore 25c extends between the end portion 25b and the main portion of the bore 25. As such, the bore 25 conforms in shape to the pen 14.

A notch 26a having an almost inverse U-shape when viewed in cross-sectional view is formed in a portion of the receptacle 23 close to the edge 24. The notch 26a is formed by cutting out a portion of a peripheral wall 26 of the receptacle 23, other than the bottom portion. A notch groove 26b which extends in a longitudinal direction of the receptacle 23 is formed in the vertex portion of the right-hand side portion from the notch 26a of the peripheral wall 26. The groove 26b is covered by a projecting portion 27 having a U-shape whose cross-sectional shape is open towards the lower position.

An attaching portion (not shown) which is initially formed with the receptacle 23 is secured to the front edge portion of the upper surface of a bottom surface wall 28 of the lower half 4, so that the receptacle 23 is disposed in the front edge portion in the case 2. On the other end, the edge 24 is fitted into a hole 29a formed in a right side wall 29 of the lower half 4, so that the wall 25a of the bore 25 opens towards the outer surface of the right side wall 29.

When the pen 14 is received in the receptacle 23, the clip 22 is disposed along the top of the pen 14 and the pen tip 21 is directed to the left side of the case 2, as illustrated in Figure 1.

When the pen 14 is inserted into the bore 25 of the receptacle 23 as described above, the further insertion of the pen 14 is blocked at a position where the conical portion 20a of the pen 14 fits into the tapering bore 25c of the bore 25, as shown in Figure 3. In this position, the right edge surface of the main portion 20 of the pen 14 is located on substantially the same plane as the outer surface of the right side wall 29 of the lower half 4.

When the pen 14 has been received into the receptacle 23, the flip 22 is positioned within the projecting portion 27 of the receptacle 23, and the engaging grooves 20b are located at positions in registry with the notch 26a formed in the peripheral wall 26.

Holes or translucent portions 27a are formed in both the front and rear side walls of the projecting portion 27 which face the side walls 22a of the clip 22, when the pen 14 is received in the receptacle 23.

A pen loss preventing mechanism 30 prevents the loss of the pen 14, and comprises a photo interrupter which outputs different signals depending on whether or not the pen 14 is in the receptacle 23; a buzzer; and a warning circuit to energize the buzzer when a signal indicating the pen 14 is not in the receptacle 13 is supplied by the photo interrupter, and the power source is shut off or the cover 6 is in its closed position.

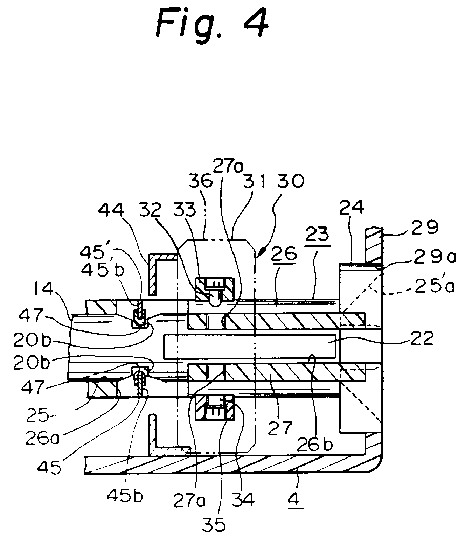

In Figures 3, 4 and 5 is seen the photo interrupter 31 which comprises a supporting member 33 which supports a light emitting device 32; a supporting member 35 which supports a photo sensitive device 34; and a circuit board 36 to which the supporting members 33 and 35 are attached. The circuit board 36 is fixed to attaching bosses 37 which are vertically formed on the wall 12 of the upper half 3. The supporting members 33 and 35 are attached to the lower surface of the circuit board 36 such that the light emitting device 32 and the photo sensitive device 34 face each other and are separated by a predetermined distance in the front/rear direction.

When the upper half 3 and the lower half 4 are joined together, the light emitting device 32 and the photo sensitive device 34 are positioned so as to face through the projecting portion 27 of the receptacle 23 in registry with the holes 27a. Therefore, when the pen 14 is not received in the receptacle 23, the light emitted from the light emitting device 32 is irradiated onto the photo sensitive device 34 through the holes 27a. However, when the pen 14 is received in the receptacle 23, the light irradiation to the photo sensitive device 34 is obstructed by the side walls 22a of the clip 22. Different signals are supplied by the photo sensitive device 34 when the pen 14 has been received in the receptacle 23 and when the pen 14 is not so received.

In the following description, the signal which is supplied by the photo sensitive device 34 when the pen 14 is not received in the receptacle 23 is referred to as an 'ON' signal, and the signal which is supplied when the pen 14 has been received in the receptacle 23 is referred to as an 'OFF' signal.

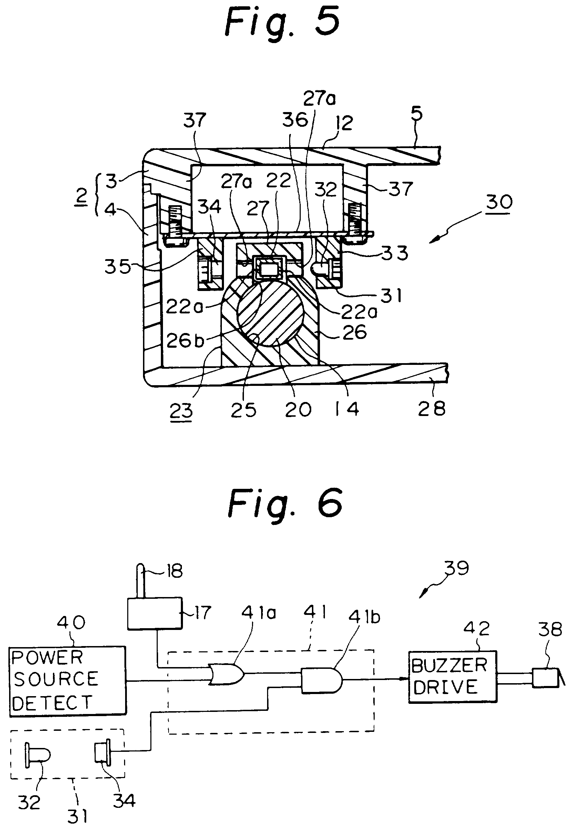

Buzzer and warning circuits are illustrated in Figure 6.

A buzzer 38 is attached to the right side wall 29 of the lower half 4. A warning circuit 39 comprises power source detecting means 40 for detecting that the power source is shut off; a judging circuit 41 to execute a judgement on the basis of signals from the power source detecting means 40, the shut-off switch 17, and the photo sensitive device 34; a buzzer driving circuit 42 to which an output of the judging circuit 41 is supplied; and the buzzer 38. The judging circuit 41 comprises an OR circuit 41a which outputs a high-level signal when either one of (1) the signal which is supplied from the power source detecting means 40 when the power source is shut off; and (2) the signal which is supplied from the shut-off switch 17 when the cover 6 is in its closed position, is supplied thereto; and an AND circuit 41b which outputs a high-level signal when both of (1) the high-level signal from the OR circuit 41a, and (2) the high-level signal based on the ON signal of the photo sensitive device 34, are supplied thereto. When the high-level signal is output from the AND circuit 41b, the buzzer driving circuit 42 energizes the buzzer 38.

The buzzer 38 is not actuated when the power source is shut off or the cover 6 is moved to its closed position, and the pen 14 has been received in the receptacle 23. However, the buzzer 38 is actuated when the power source is shut off or the cover 6 is closed and the pen 14 is not received in the receptacle 23. Thus, the buzzer 38 emits a warning signal that the pen 14 is not received in the receptacle 23 when power to the tablet 1 is shut off either via actuation of the power button 16 or closure of the cover 6.

The light emitting device 32 and the photo sensitive device 34 can also be directly attached to the projecting portion 27 of the receptacle 23.

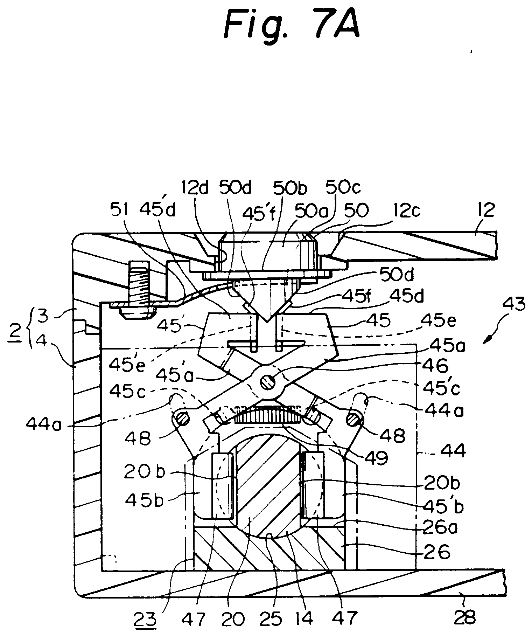

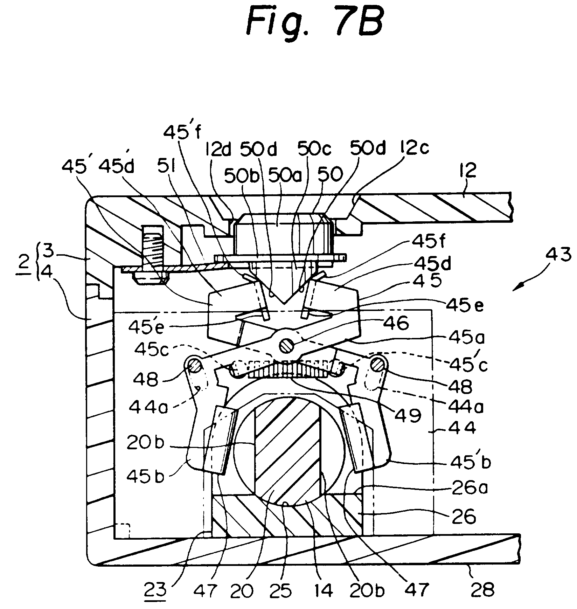

Figures 7A and 7B illustrate a locking mechanism 43 for the pen 14. The locking mechanism 43 serves releasably to secure the pen 14 within the pen receptacle 23.

A chassis 44 serves as a base portion of the locking mechanism 43. The chassis 44 has an almost gate-like shape when it is viewed from the right or left direction and is disposed so as to ride over the receptacle 23 at the position where the notch 26a is formed. The chassis 44 is secured to the bottom surface wall 28 or the like of the lower half 4.

Spring loaded locking levers 45 and 45' are rotatably supported on a supporting shaft 46 which projects leftwardly towards the chassis 44. The shaft 46 projects through central portions of intermediate members 45a and 45'a which mutually cross to form an X-shape pattern when they are viewed from the right or left direction. Lower members 45b and 45'b which extend in an almost vertical direction are located so as to face each other in the front or rear direction through the hole 52 of the receptacle 23. Engaging members 47 preferably made of a synthetic resin are attached to the oppositely facing side edge portions of the lower members 45b and 45'b, which engaging members 47 engage the grooves 20b of the pen 14 when it is received within the receptacle 23.

Pins 48, which serve to restrict movement of the levers 45 and 45', project rightwardly from the upper edge portions of the pins 48 are slidably engaged within long restricting holes 44a formed in the chassis 44. Opposite ends of a tension spring 49 are respectively secured on spring hook portions 45c and 45'c formed on lower ends of the intermediate members 45a and 45'a closest to the lower members 45b and 45'b.

Camming members 45e and 45'e are formed in the edge portions of upper members 45d and 45'd which project from the upper edge portions of the intermediate members 45a and 45'a in such a direction that they mutually approach. As illustrated, the camming members 45e and 45'e include portions 45f and 45'f (hereinafter referred to as 'portions to be pressed') which project upwardly and outwardly from the upper members 45d and 45'd so as to have an almost V-shape.

A rotating force in a direction such that the engaging members 47 mutually approach is applied to the levers 45 and 45' by resilient spring force of the tension spring 49. While the levers 45 and 45' are not pressed in the direction opposite to the direction of such a rotating force, as shown in Figure 7A, the pins 48 come into contact with the lower edges of the holes 44a, so that the levers 45 and 45' are held at the locked position at which further rotation is prevented. In this locked position, the engaging members 47 are located so as to be partially inserted into the bore 25 of receptacle 23 and the two portions 45f and 45'f to be pressed are relatively closely positioned.

An unlocking button 50 comprises a button portion 50a; a radial flange portion 50b which projects radially from a lower edge portion of the button portion 50a; and a pressing portion 50c which projects downwardly from a central portion of the underside of the button 50. The pressing portion 50c has a substantially wedge shape at least when viewed from the right or left direction.

A concave portion or recess 12c and a through hole 12d are formed in the wall 12 of the upper half 3 at a position in registry with the levers 45 and 45'. The button 50 is positioned such that the button portion 50a is inserted into the hole 12d so as to be slidable therein in the vertical direction. The flange portion 50b is disposed within the case 2 and prevents the button 50 from complete travel through the hole 12d. A tip portion of a leaf spring member 51 having an almost fork-like shape whose one end portion is fixed to the lower surface of the wall 12 resiliently engages the flange portion 50b from the lower position. Thus, in a state in which the button 50 is not pressed downwardly, the button 50 is held at the position where the flange portion 50b is pressed against an underside of the lower surface of the wall 12. A portion of the button portion 50a then protrudes out into the concave portion 12c.

When the upper half 3 and the lower half 4 are joined together, two wedge-shaped oblique surfaces 50d of the pressing portion 50c of the button 50 come into slight contact with or approach the portions 45f and 45'f of the levers 45 and 45'.

When the pen 14 is inserted into the bore 25 of the receptacle 23, the conical portion 20a first comes into contact with the engaging members 47 of the levers 45 and 45', and from this position, the pen 14 moves while individually camming the engaging members 47 outwardly in the front and rear directions. Thus, the levers 45 and 45' are rotated against the rotating forces exerted by the tension spring 49 and the engaging members 47 ride over the outer peripheral surface of the main portion 20 of the pen 14. Then, when the engaging grooves 20b come into registry with the engaging members 47, almost simultaneously with the completion of the insertion of the pen 14 into the bore 25, the outward camming forces on the levers 45 and 45' rotate into their locked position. At that time, the engaging members 47 engage the engaging grooves 20b.

It can be appreciated that in the locked position, the pen 14 is prevented from being pulled out of the receptacle 23. Therefore, in this state, if the tablet 1 is disposed in any position, the pen 14 is not permitted to be pulled out or dropped from the receptacle 23, so that there is no fear that the pen 14 can drop out during transport of the tablet 1.

On the other hand, to remove the pen 14, the unlocking button 50 is depressed. That is, the button 50 is pressed downwardly and the pressing portion 50c respectively cams the portions 45f and 45'f of the levers 45 and 45' outwardly in almost opposite front and rear directions. As shown in Figure 7B, the levers 45 and 45' are moved to unlocking positions at which the engaging members 47 are moved out of the bore 25 of the receptacle 23 and out of engagement with the engaging grooves 20b. Thus, the pen 14 can be removed from the receptacle 23 by pulling out on the right edge portion of the pen 14 or appropriate downward inclination of the tablet 1.

It is also possible to provide a construction in which a spring is disposed within the pen tip portion of the bore 25, so that the spring becomes compressed when the pen 14 is placed in the receptacle 23. Then, when the locking mechanism 43 is released, the spring will bias the pen 14 outwardly from the receptacle 23.

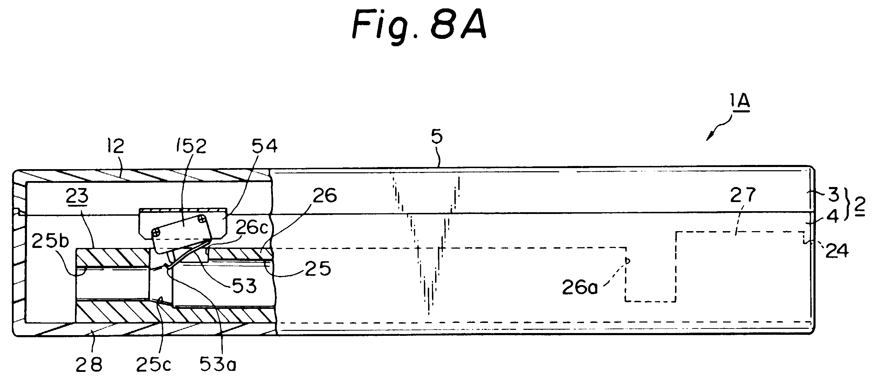

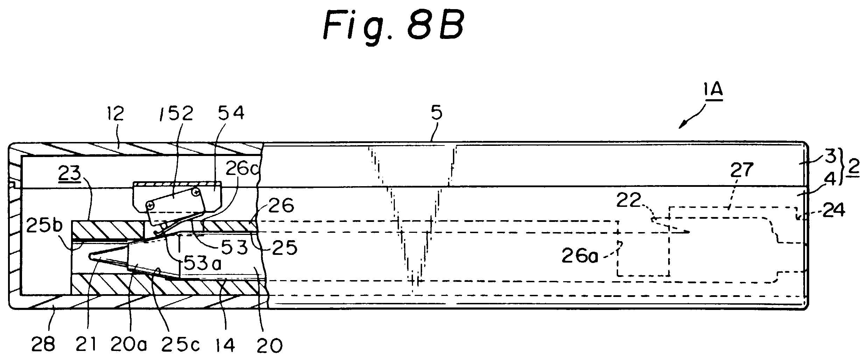

Figures 8A and 8B illustrate a second tablet 1A embodying the invention.

The tablet 1A differs from the tablet 1 with respect only to the detecting means for detecting whether the pen 14 has been received in the receptacle 23. Therefore, only the section of interest is illustrated in the drawings.

A microswitch 152 has a leaf-type actuator 53. The microswitch 152 is attached to a switch attaching member 54 secured to the lower half 4. A hole 26c is formed at the position corresponding to the tapering bore 25c of the bore 25 in the vertex portion of the peripheral wall 26 of the receptacle 23. A tip portion 53a of the actuator 53 of the microswitch 152 is located so as to project into the bore 25 from the tapering bore 25c and through the hole 26c.

The actuator 53 is not pressed when the pen 14 is not received in the receptacle 23, as shown in Figure 8B, the conical portion 20a of the pen 14 presses against the tip portion 53a of the actuator 53, thereby actuating the microswitch 152. Consequently, different signals are supplied by the microswitch 152 depending on whether or not the pen 14 is received in the receptacle 23.

It can be appreciated that the microswitch 152 can be used in place of the photo interrupter 31 in the warning circuit 39 shown in Figure 6. It is sufficient that a high-level signal is supplied by the microswitch 152 to the AND circuit 51b when the actuator 53 is not pressed.

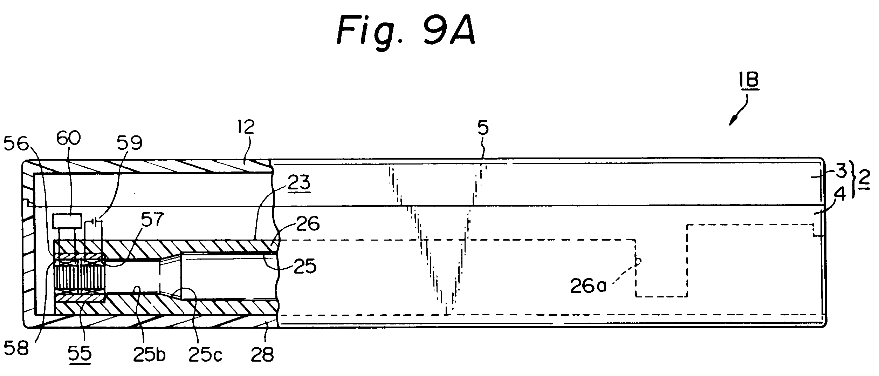

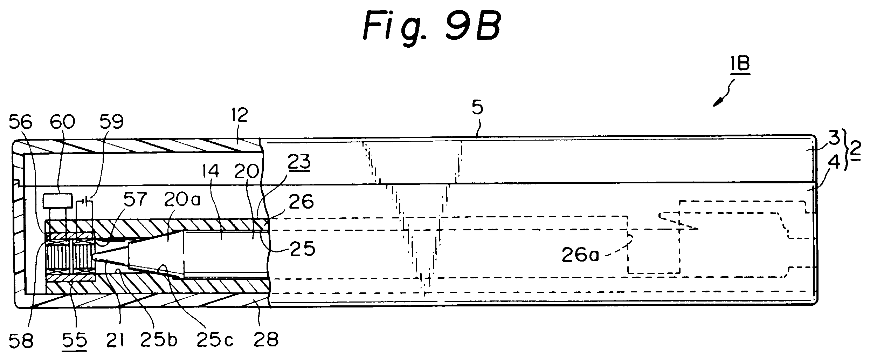

Figures 9A and 9B illustrate a third tablet 1B also embodying principles of the invention.

The tablet 1B differs from the tablet 1 with respect only to the detecting means for detecting whether the pen 14 has been enclosed in the receptacle 23.

The detecting means used in the tablet 1b is suitable for a case where the pen tip 21 of the pen 14 comprises a permanent magnet, that is, the case where, for instance, an electromagnetic coupling method is used as a method of inputting a hand written signal via the liquid crystal tablet panel 13.

A coil block 55 comprising two coils 57 and 58 which are arranged on the inner peripheral surface of a cylindrical bobbin 56 so as to be slightly spaced apart from each other in the axial direction. The coil block 55 is fitted into the end portion 25b of the bore 25 of the receptacle 23.

The right-hand coil 57 is used to generate a magnetic field and the left-hand coil 58 is used for detection purposes. A DC power source 59 is connected to both terminals of the magnetic field generating coil 57. A current detecting device 60 is coupled to the detecting coil 58.

While the pen 14 is not received in the receptacle 23, the magnetic flux generated by the magnetic field generating coil 57 does not change, so that no inductive electromotive force occurs in the detecting coil 58. When the pen 14 is received into the receptacle 23, the edge of the permanent magnet pen tip 21 approaches the magnetic field generating coil 57, so that the magnetic flux of the coil 57 changes. Therefore, an inductive electromotive force is generated in the detecting coil 58 that in turn is detected by the current detecting device 60.

Again, it is sufficient that a high-level signal is supplied to the AND circuit 41b in the warning circuit 39 when no inductive electromotive force is generated in the detecting coil 58, and that a low-level signal is supplied to the AND circuit 41b when an inductive electromotive force is generated in the detecting coil 58.

Therefore, when a user forgets to place the pen 14 into the receptacle 23 following use, a warning is generated by the warning means, thereby reminding the user to place the pen 14 into the receptacle 23 so that the loss of the pen 14 can be effectively prevented. Moreover, there is no need to tether the pen 14 to the case 2 by a cord, a chain or the like, so that the use of the pen 14 is not impeded.

The detecting means and the warning means shown in the embodiments have been shown as merely a few examples of devices that can be employed.

## Claims

1. An electronic tablet (1) which can receive hand written information via an input pen (14), including a receptacle (23) for the pen (14),
characterised by a detector (30) operative to detect the presence of the pen (14) in the receptacle (23).

2. A tablet according to claim 1 further including a signal generator (38) coupled to the detector (30) and operative to generate a signal when the pen (14) is not received within the receptacle (23).

3. A tablet according to claim 1 further including a power source detector (40) operative to detect provision of operating power to the tablet (1).

4. A tablet according to claim 2 wherein said signal generator (38) is operative to signal absence of the pen (14) from its receptacle (23) when operational power is not provided to the tablet (1).

5. A tablet according to claim 1 further including a cover (6) which is movable between closed and opened positions and a switch (17) operatively disposed to detect closure of said cover (6).

6. A tablet according to claim 5 further including a signal generator (38) operative to generate a warning signal when the cover (6) is in its closed position and the detector (30) does not detect the presence of the pen (14) in the receptacle (23).

7. An electronic tablet (1) according to claim 1, further including a combination display and input surface (13) on which the untethered pen (14) can input hand written information; a power detector (40) operative to detect non-provision of operational power to the tablet (1); and a warning signal generator (38) operatively coupled to the power detector (40) and pen detector (31, 32) that generates a warning signal when non-provision of operating power to the tablet (1) and absence of the pen (14) from the receptacle (23) are concurrently detected.

8. A tablet according to claim 7 including a housing (2) comprising a substantially rectangular box at one face (12) of which is disposed said display and input surface (13).

9. A tablet according to claim 8 further comprising a cover (6) hingedly secured along one edge of said housing (2) and operative to move between open and closed positions, said cover (6) overlying said display and input surface (13) when in its closed position.

10. A tablet according to claim 9 further comprising a switch (17) operatively disposed on said face (12) at which is disposed said display and input surface (13) to detect closure of said cover (6) and cut off provision of operating power to said tablet (1).

11. A tablet according to claim 7 or claim 10 wherein the receptacle (23) includes means (43) for releasably securing the pen (14) in the receptacle (23).

12. A tablet according to claim 1 comprising:
a substantially rectangular housing (2) with a top face (12); an input/display surface (13) disposed at said top face (12); and a cover (6) attached to said housing (2) and operative to move between open and closed positions, said cover (6) overlying said input/display surface (13) in its closed position; wherein the pen is an untethered pen (14) and is used to input hand written information via said input/display surface (13).

13. A tablet according to claim 14 further including means (43) for releasably securing said pen (14) within said receptacle (23).

## Patentansprüche

1. Elektronisches Tablett (1), welches eine handgeschriebene Information über einen Eingabestift (14) empfangen kann, mit einer Aufnahme (23) für den Stift (14),
gekennzeichnet durch einen Detektor (30), der die Anwesenheit des Stiftes (14) in der Aufnahme (23) ermittelt.

2. Tablett nach Anspruch 1, welches außerdem einen Signalgenerator (38) aufweist, der mit dem Detektor (30) gekoppelt ist und der ein Signal erzeugt, wenn der Stift (14) sich nicht in der Aufnahme (23) befindet.

3. Tablett nach Anspruch 1, das außerdem einen Spannungsdetektor (40) aufweist, der die Bereitstellung einer Betriebsspannung für das Tablett (1) ermittelt.

4. Tablett nach Anspruch 2, wobei der Signalgenerator (38) die Abwesenheit des Stiftes (14) aus seiner Aufnahme (23) signalisiert, wenn die Betriebsspannung für das Tablett (1) nicht bereitgestellt wird.

5. Tablett nach Anspruch 1, das außerdem eine Abdeckung (6), die zwischen einer geschlossenen und geöffneten Position bewegbar ist, und einen Schalter (17) aufweist, der so angeordnet ist, daß er die Schließstellung der Abdeckung (6) ermittelt.

6. Tablett nach Anspruch 5, das außerdem einen Signalgenerator (38) aufweist, der ein Warnsignal erzeugt, wenn die Abdeckung (6) sich in ihrer geschlossenen Position befindet und der Detektor (30) nicht die Anwesenheit des Stiftes (14) in der Aufnahme (23) ermittelt.

7. Elektronisches Tablett (1) nach Anspruch 1, das außerdem eine Kombinationsanzeige- und Eingabeoberfläche (13) aufweist, auf der der nicht angebundene Stift (14) eine handgeschriebene Information eingeben kann; einen Spannungsdetektor (40), der die Nicht-Bereitstellung einer Betriebsspannung für das Tablett (1) ermittelt; und einen Warnsignalgenerator (38), der mit dem Spannungsdetektor (40) und dem Stift-Detektor (31, 32) gekoppelt ist, der ein Warnsignal erzeugt, wenn die Nicht-Bereitstellung der Betriebsspannung zum Tablett (1) und die Abwesenheit des Stiftes (14) in der Aufnahme (23) gleichzeitig ermittelt werden.

8. Tablett nach Anspruch 7, das ein Gehäuse (2) besitzt, das durch eine in etwa rechteckige Box gebildet ist, wobei auf einer Oberfläche (12) die Anzeige- und Eingabeoberfläche (13) angeordnet ist.

9. Tablett nach Anspruch 8, welches außerdem eine Abdeckung (6) aufweist, die längs eines Randes des Gehäuses (2) mittels eines Scharniers befestigt ist und zwischen einer offenen und geschlossenen Position bewegbar ist, wobei die Abdeckung (6) über der Anzeige- und Eingabeoberfläche (13) liegt, wenn diese sich in der geschlossenen Position befindet.

10. Tablett nach Anspruch 9, das weiter einen Schalter (17) besitzt, der auf der Oberfläche (12) angeordnet ist, auf der die Anzeige- und Eingabeoberfläche (13) angeordnet ist, um die Schließstellung der Abdeckung (6) und die unterbrochene Bereitstellung der Betriebsspannung zum Tablett (1) zu ermitteln.

11. Tablett nach Anspruch 7 oder 10, wobei die Aufnahme (23) eine Einrichtung (43) besitzt, um den Stift (14) lösbar in der Aufnahme (23) zu sichern.

12. Tablett nach Anspruch 1, mit:
einem in etwa rechteckigen Gehäuse (2) mit einer Kopfoberfläche (12);
einer Eingabe/Anzeige-Oberfläche (13), die auf der Kopfoberfläche (12) angeordnet ist;
und einer Abdeckung (6), die am Gehäuse (2) befestigt ist und sich zwischen einer offenen und geschlossenen Position bewegen kann, wobei die Abdeckung (6) über der Eingabe/Anzeige-Oberfläche (13) in ihrer geschlossenen Position liegt;
wobei der Stift ein nicht angebundener Stift (14) ist und dazu verwendet wird, eine handgeschriebene Information über die Eingabe/Anzeige-Oberfläche (13) einzugeben.

13. Tablett nach Anspruch 14, das außerdem eine Einrichtung (43) zur lösbaren Sicherung der Stiftes (14) innerhalb der Aufnahme (23) aufweist.

## Revendications

1. Tablette électronique (1) qui peut recevoir des informations manuscrites à l'aide d'un crayon (14) de saisie, comprenant un réceptacle (23) pour le crayon (14),
caractérisée par un détecteur (30) destiné à détecter la présence du crayon (14) dans le réceptacle (23).

2. Tablette selon la revendication 1, comprenant en outre un générateur (38) de signaux couplé au détecteur (30) et destiné à créer un signal lorsque le crayon (14) n'est pas logé dans le réceptacle (23).

3. Tablette selon la revendication 1, comprenant en outre un détecteur d'alimentation (40) destiné à détecter la transmission d'énergie de fonctionnement à la tablette (1).

4. Tablette selon la revendication 2, dans laquelle le générateur de signaux (38) est destiné à signaler l'absence du crayon (14) de son réceptacle (23) lorsque de l'énergie d'alimentation n'est pas transmise à la tablette (1).

5. Tablette selon la revendication 1, comprenant en outre un couvercle (6) qui est mobile entre des positions de fermeture et d'ouverture, et un interrupteur (17) placé pendant le fonctionnement de manière qu'il détecte la fermeture du couvercle (6).

6. Tablette selon la revendication 5, comprenant en outre un générateur (38) de signaux destiné à créer un signal d'avertissement lorsque le couvercle (6) est dans sa position de fermeture, et le détecteur (30) ne détecte pas la présence (14) du crayon dans le réceptacle (23).

7. Tablette électronique (1) selon la revendication 1, comprenant en outre une surface combinée (13) d'affichage et de saisie sur laquelle le crayon (14) sans liaison peut saisir des informations manuscrites, un détecteur (40) d'alimentation destiné à détecter l'absence d'énergie de fonctionnement transmise à la tablette (1), et un générateur (38) de signaux d'avertissement couplé pendant le fonctionnement au détecteur d'énergie (40) et au détecteur de crayon (31, 32) et qui crée un signal d'avertissement lorsque l'absence d'énergie de fonctionnement transmise à la tablette (1) et l'absence du crayon (14) du réceptacle (23) sont détectées simultanément.

8. Tablette selon la revendication 7, comprenant un boîtier (2) qui comporte une boîte pratiquement rectangulaire à une face (12) de laquelle est placée la surface (13) d'affichage et de saisie.

9. Tablette selon la revendication 8, comprenant en outre un couvercle (6) fixé de manière articulée le long d'un bord du boîtier (2) et destiné à se déplacer entre les positions d'ouverture et de fermeture, le couvercle (6) recouvrant la surface d'affichage et de saisie (13) lorsqu'il est en position de fermeture.

10. Tablette selon la revendication 9, comprenant en outre un interrupteur (17) disposé pendant le fonctionnement sur ladite face (12) à laquelle est disposée la surface d'affichage et de saisie (13) pour la détection de la fermeture du couvercle (6) et l'arrêt de la transmission d'énergie de fonctionnement à la tablette (1).

11. Tablette selon la revendication 7 ou 10, dans laquelle le réceptacle (23) comporte un dispositif (43) de fixation amovible du crayon (14) dans le réceptacle (23).

12. Tablette selon la revendication 1, comprenant un boîtier pratiquement rectangulaire (2) ayant une face supérieure (12), une surface de saisie-affichage (13) disposée à la face supérieure (12), et un couvercle (6) fixé au boîtier (2) et destiné à se déplacer entre des positions d'ouverture et de fermeture, le couvercle (6) recouvrant la surface (13) de saisie-affichage dans sa position de fermeture, et dans laquelle le crayon est un crayon (14) sans lien et est utilisé pour la saisie d'informations manuscrites par l'intermédiaire de la surface (13) de saisie-affichage.

13. Tablette selon la revendication 12, comprenant en outre un dispositif (43) de fixation temporaire du crayon (14) à l'intérieur du réceptacle (23).
